# EUROPÄISCHE PATENTANMELDUNG

(11) **EP 1 331 728 A2**
(43) Veröffentlichungstag der Anmeldung: **30.07.2003**
(21) Anmeldenummer: 03001120.9
(22) Anmeldetag: 20.01.2003
(51) Int. Cl.: H02P 3/04

(54) **Verfahren zum Halten eines Maschinenelements und/oder einer mit diesem verbundenen Last**

(30) Priorität: 29.01.2002 DE 10203374
(71) Anmelder: SIEMENS AKTIENGESELLSCHAFT, 80333 München (DE)
(72) Erfinder: Eckardt, Dieter, Dr., 91074 Herzogenaurach (DE); Hauf Ronald, 91096 Möhrendorf (DE)

(57) **Zusammenfassung**

Die Erfindung zeigt ein sehr sicheres Verfahren zum Halten eines direkt oder indirekt von einem geregelten elektromotorischen Antrieb (M) positionierbaren, nicht selbsthemmenden Maschinenelements und/oder einer mit diesen verbunden Last (L) unter Verwendung einer mechanischen Haltebremse (BB). Dabei wird zum sicheren Halten der Antrieb (M) in einen standby-Betrieb gebracht und die Bremse (BB) aktiviert. Sofern die Halteposition über einen Toleranzwert (Δs) hinaus verlassen wird, wird der Antrieb (M) wieder aktiviert und fängt die Last (L) ab. Als Antrieb ist ein sicherer Antrieb (M) verwendet. Bei einem solchen Antrieb ist zwar kein ungewolltes Abschalten verhinterbar, aber ein ungewolltes Anlaufen ist sicher vermieden.

## Beschreibung

Die Erfindung bezieht sich auf ein Verfahren zum Halten eines direkt oder indirekt von einem geregelten elektromotorischen Antrieb positionierbaren, nicht selbsthemmenden Maschinenelements und/oder einer mit diesem verbunden Last unter Verwendung einer mechanischen Haltebremse.

Beim Betrieb von Maschinen ist heutzutage der Aspekt der Sicherheitstechnik von hoher Bedeutung. Dies gilt insbesondere unter dem Gesichtspunkt, dass seit 1995 EG-Maschinenrichtlinien geschaffen worden sin. Aber auch außerhalb des EG-Raumes, so in den Vereinigten Staaten von Amerika und in Japan kommen beispielsweise aus nationalen Produkthaftungsgesetzen vergleichbare Anforderungen zum Tragen. Sicherheitstechnik kann somit als ein Focus des industriellen Weltmarktes betrachtet werden. Diese Tatsache hat auf dem Markt ein Bedürfnis nach Geräten und Funktionen entstehen lassen, die ein Umsetzen von sicherheitstechnischen Anforderungen ermöglichen. Im Bereich der numerischen Steuerungen wird heutzutage bereits in großem Umfang das Sicherheitskonzept "SINUMERIK SAFETY INTEGRATED ®" eingesetzt. Dieses Konzept lässt sich übrigens auch auf andere Branchen, z.B. auf den Bereich von Produktionsmaschinen, problemlos übertragen.

Die Erfindung betrifft nun einen weiteren speziellen Sicherheitsaspekt, der unter den verschiedensten Bedingungen immer wieder in Industrieanlagen auftaucht. Wenn nämlich Achsen bzw. Mechaniken bei abgeschalteten Antrieben nicht selbsthemmend sind, besteht die Gefahr, dass durch die Schwerkraft Abstürze erfolgen. Beispielsweise bei vertikalen Linearachsen, insbesondere hängenden Achsen, oder bei Rundachsen bzw. Spindeln mit asymmetrischer Gewichtsverteilung können damit solche gefahrbringenden Bewegungen entstehen.

Diese Achsen bzw. Mechaniken müssen daher durch geeignete Maßnahmen sicher im Stillstand gehalten werden.

Als dauernd aktives System kann dazu ein mechanischer Gewichtsausgleich dienen, der jedoch relativ großen konstruktiven Aufwand bedingt. In Ausnahmefällen kann ein Abfangen mittels Steckbolzen, Unterbauungen oder Stützen erfolgen, was aber ganz gezieltes Eingreifen voraussetzt und demzufolge nur für Sondersituationen wie Umbauten und Inbetriebnahmen in Frage kommt. Für immer wieder zeitweise betriebliche Aktivierung kommen daher nur Haltebremse oder Betriebsbremse in Frage.

Die bisher übliche Maßnahme zum sicheren Halt sieht so aus, dass der elektromotorische Antrieb, von dem die Lage des Maschinenelementes und/oder der zugehörigen Last abhängt, stillgesetzt wird und dass mittels einer mechanischen, reibschlüssig wirkenden Bremse am jeweiligen Antrieb ein relativ sicherer Halt erreicht wird, wobei dann der Antrieb im Stillstand abgeschaltet wird.

Wenngleich diese Bremse durch spezielle Maßnahmen fortlaufend auf ihre Funktionsfähigkeit getestet werden kann, handelt es sich dabei dennoch um kein absolut sicheres System. Überprüft werden kann zwar durch elektronische Konzepte ein sicheres Ansteuern der Bremse und es kann auch durch Test des Reibmoments im Haltezustand ein Funktionstest der bremse vorgenommen werden, jedoch besteht immer noch die Gefahr, dass durch plötzlich auftretende Störungen, beispielsweise ein völlig unerwartet eintretendes Verölen, die Bremskraft schlagartig reduziert wird. Diese Gefahr ist seit langem bekannt und so wurde auch schon vorgeschlagen, dass nicht nur eine, sondern mehrere Bremsen für erhöhte Sicherheitsanforderungen beim Halt verwendet werden. Dies bedingt jedoch einen sehr hohen technischen Aufwand.

Aufgabe der Erfindung ist es, ein Verfahren der eingangs genannten art mit hoher Haltesicherheit zu schaffen.

Gemäß Der Erfindung wird diese Aufgabe für ein Verfahren der eingangs genannten Art dadurch gelöst, dass zum sicheren Halten der Antrieb angehalten und die Bremse aktiviert wird, dass daraufhin der Antrieb zwar abgeschaltet wird, aber in Bereitschaft bleibt, dass jedoch dann, wenn die Halteposition über einen Toleranzwert hinaus verlassen wird, das Maschinenelement nach Art einer Fangregelung auf Stillstand gebracht wird, wobei als Antrieb ein sicherer Antrieb verwendet ist, d.h., es ist zwar kein ungewolltes Abschalten des Antriebs verhinderbar, aber ein ungewolltes Anlaufen des Antriebs wird sicher vermieden.

Bei der Erfindung wird dabei von der Erkenntnis ausgegangen, das ein vollständiges Abschalten des Antriebs beim Halt, was die bislang einzig übliche Maßnahme darstellt, stets deswegen vorgenommen wird, weil die Befürchtung besteht, das der Antrieb durch ungewolltes Anlaufen eine Gefahr für das Haltesystem darstellt. Wenn nun jedoch Maßnahmen ergriffen sind, die ein solches ungewolltes Anlaufen des Antriebs verhindern, stellt ein derartiger Antrieb einen "sicheren Antrieb" dar und die als technisches Vorurteil bestehende Gefahrenvermutung liegt eben gerade nicht vor. Somit kann der Antrieb als redundantes, völlig von der mechanischen Bremse unabhängiges elektrisches Haltesystem verwendet werden, das in diesem Fall im stand-by-Betrieb vorgehalten ist.

Eine vorteilhafte Ausbildung der Erfindung ist dadurch gekennzeichnet, dass die Fangregelung bei vorliegendem Bereitschaftszustand reglerautark erfolgt. Damit ist auch bei Ausfall der Steuereinrichtung immer noch ein sicherer Halt möglich.

Ein Ausführungsbeispiel der Erfindung ist in der Zeichnung dargestellt und wird im folgenden näher erläutert. Dabei zeigen:
- FIG 1: ein Strukturbild und
- FIG 2: Diagramme zur Wirkungsweise.

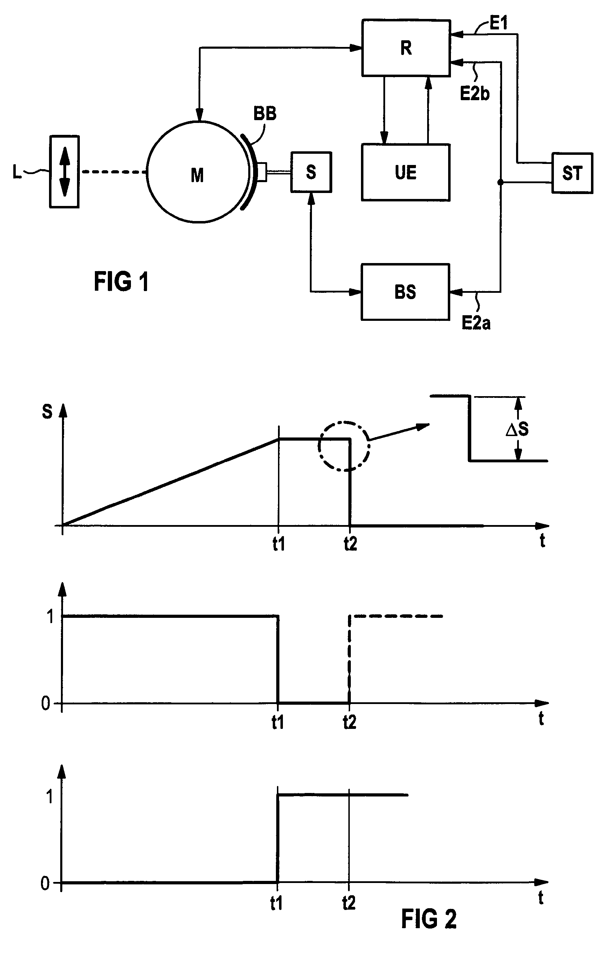

In der Darstellung gemäß FIG 1 ist in Form eines Strukturbildes die erfindungsgemäße Anordnung gezeigt. Mittels eines Antriebs, dem ein Motor M und ein Regler R zu eigen sind, möge, wie durch eine gestrichelte starke Linie angedeutet ist, die sozusagen eine Getriebefunktion beinhaltet, eine Last L bidirektional bewegt werden können. Die mögliche Bewegung ist dabei durch einen Doppelpfeil symbolisiert.

Dazu liefert eine Steuerungseinrichtung ST Sollwerte der Bewegung an einen Eingang E1 des Reglers R, der demzufolge elektrische Steuersignale an den Motor M liefert und von diesem Lage- und/oder Bewegungsrückmeldungssignale über die jeweilige Ist-Position und gegebenenfalls auch Ist-Geschwindigkeit zurückerhält, wie dies durch einen dünnen Doppelpfeil angedeutet ist. Abhängig von den Sollwerten der Steuerungseinrichtung ST an den Regler R kann somit die Last L in beliebiger Art und Weise vertikal gehoben oder gesenkt werden.

Es möge nun der Fall eintreten, dass die Last L sicher an einer definierten Position gehalten werden soll. Dazu wird ein diesbezüglicher Lagesollwert von der Steuerung ST über den Eingang E1 dem Regler R mitgeteilt und die Last L dementsprechend positioniert. Wenn dies erfolgt ist, was der Steuereinrichtung ST durch der Übersichtlichkeit halber nicht dargestellte Signalflüsse vom Motor M oder vom Regler R mitgeteilt werden kann, wird seitens der Steuerungseinrichtung ST über einen Eingang E2a eine Bremsansteuerung BS aktiviert, die über eine Spulenanordnung S und eine Bremsbacke BB den Motor M mechanisch bremst. Insofern entspricht die Anordnung gemäß FIG 1 dem bisherigen Vorgehen zum Halten.

Wesentlich für die Erfindung ist es nun, dass dabei der Motor M nur in einen stand-by-Betrieb abgeschaltet wird. Dies erfolgt unter der Voraussetzung, dass das System insgesamt einen sicheren Antrieb darstellt, d.h. das der Motor M gegen ungewollte Lageänderungen durch elektronische Maßnahmen gesichert ist. Seitens einer Überwachungseinrichtung UE, die mit dem Regler R bidirektional verbunden ist, kann nun fortlaufend überwacht werden, ob im Haltzustand ungewollte Lageänderungen über einen Schwellwert hinaus auftreten. Wenn ein Toleranzwert verlassen wird, wird über den Regler R der Motor M dahingehend aktiviert, dass er fangregelnd die Last L zum Stillstand bringt.

Selbstverständlich könnte die Überwachungseinrichtung UE auch direkt mit der Steuerungseinrichtung verbunden sein, jedoch ist das direkte Zusammenspiel mit dem Regler dahingehend von Vorteil, dass eine Autarkie des Systems von der Steuerungseinrichtung ST vorliegt.

Für den Haltzustand ist es durchaus auch möglich, dass die Reglerparameter des Reglers R für diesen Zustand speziell parametriert werden.

Die Last L wird beim erfindungsgemäßen sicheren Halt damit durch zwei völlig unabhängige Systeme gehalten, nämlich zum einen durch die Bremse und zum anderen durch die im stand-by-Betrieb vorgehaltene elektrische Lageregelung.

Dieser Sachverhalt ist auch in den Diagrammen gemäß FIG 2 gezeigt, bei denen das obere Diagramm ein Zeit-Weg-Diagramm für die Last L zeigt und wobei die darunterliegenden zeitgleichen Diagramme das Wirksamschalten (logisch "1") bzw. Unwirksamschalten (logisch "0") des elektrischen und des mechanischen Bremsens zeigen. Im oberen Diagramm ist dargestellt, dass abhängig von einer Zeit t die Last L ihren Weg s bis zu einem Zeitpunkt t1 ansteigend variieren möge, wobei dort ein sicherer Halt erfolgen möge. Dies zeigt sich darin, dass der Weg s unverändert bleibt. Wenn jedoch nun zu einem Zeitpunkt t2 ein Durchsacken der Last L erfolgen möge, das wie durch eine Lupe angedeutet, einen Wert Δs überschreiten möge, führt dies zu einem Lastauffangen mittels des Antriebs. Der Sachverhalt ist im mittleren Diagramm von FIG 2 gezeigt. Durch Zustände logisch "0" und logisch "1" ist das Wirksamsein des Antriebs während des Bewegungsvorganges bis zu Zeit t1 gezeigt und die stand-by-Bereitschaft möge im Zustand logisch "0" vorliegen. Durch eine gestrichelte Linie ist nun angedeutet, dass beginnend mit dem Zeitpunkt t2 der Antrieb aus dem stand-by-Betrieb heraus aktiv geschaltet wird, was in der Darstellung durch eine gestrichelte Linie angedeutet ist.

Im unteren Diagramm von FIG 2 ist das Ansprechen der mechanische Bremse ab dem Zeitpunkt t1 gezeigt, was sowohl beim üblichen, wie beim erfinderischen Betrieb gleicherweise erfolgt. Jedoch muss davon ausgegangen werden, dass beispielsweise zum Zeitpunkt t2 ein Versagen der mechanischen Bremse aufgetreten ist. Dieser Zustand kann selbstverständlich dem Betreiber der Anlage optisch und akustisch gemeldet werden.

## Patentansprüche

1. Verfahren zum Halten eines direkt oder indirekt von einem geregelten elektromotorischen Antrieb positionierbaren, nicht selbsthemmenden Maschinenelementss unter Verwendung einer mechanischen Haltebremse, **dadurch gekennzeichnet, dass** zum sicheren Halten der Antrieb (M) angehalten und die Bremse (BB) aktiviert wird, dass daraufhin der Antrieb (M) zwar abgeschaltet wird, aber in Bereitschaft bleibt, dass jedoch dann, wenn die Halteposition über einen Toleranzwert hinaus verlassen wird, das Maschinenelement nach Art einer Fangregelung auf Stillstand gebracht wird, wobei als Antrieb (M) ein sicherer Antrieb verwendet ist, d.h., es ist zwar kein ungewolltes Abschalten des Antriebs (M) verhinderbar, aber ein ungewolltes Anlaufen des Antriebs (M) wird sicher vermieden.

2. Verfahren nach Anspruch 1, **dadurch gekennzeichnet, dass** die Fangregelung bei vorliegendem Bereitschaftszustand reglerautark erfolgt.
